# EUROPÄISCHE PATENTANMELDUNG

(11) **EP 2 560 131 A1**
(43) Veröffentlichungstag der Anmeldung: **20.02.2013**
(21) Anmeldenummer: 11181945.4
(22) Anmeldetag: 20.09.2011
(51) Int. Cl.: G06K 19/073, G06K 19/07, G07F 7/00, G06F 21/00

(54) **Kartenförmiger Datenträger und System für elektronische Fahrscheine**

(30) Priorität: 18.08.2011 DE 202011104705 U
(71) Anmelder: mega-tel AG/SA, 3073 Gümligen (CH)
(72) Erfinder: Chappuis, Pierre, 3073 Gümligen (CH)
(74) Vertreter: Rupp, Christian

(57) **Zusammenfassung**

Die vorliegende Erfindung stellt einen kartenförmigen Datenträger 1 vor, auf dem sowohl benutzerrelevante Daten, wie Kontaktdaten, Ermäßigungen, Gültigkeitsdauer o.ä. sicher abgespeichert werden können, als auch elektronische Fahrscheine einfach und überschreibbar gespeichert werden können. Der kartenförmige Datenträger 1 stellt eine attraktive Ergänzung, resp. Alternative zu elektronischen Fahrscheinen auf NFC-Mobiltelefonen dar. Der kartenförmige Datenträger 1 weist für die Speicherung zwei verschiedene Speicherelemente 3, 4, idealerweise NFC-Bauteile auf. Eines ist bevorzugt ein Bauteil, in dem benutzerrelevante Daten verschlüsselt abgespeichert werden, und das andere ist ein kostengünstiges Bauteil, in dem ein elektronischer Fahrschein bzw. Daten bezüglich eines START-STOP-Vorgangs abgespeichert werden. Die vorliegende Erfindung betrifft weiter ein System bestehend aus Datenträger 1, ein oder mehreren Automaten 10 und einem Server 20, der elektronische Fahrscheine verwalten und automatisch eine Preisberechnung durchführen kann.

## Beschreibung

Die vorliegende Erfindung beschreibt einen kartenförmigen Datenträger, auf dem sowohl Benutzerdaten als auch elektronische Fahrscheine gespeichert werden können. Die vorliegende Erfindung betrifft ferner ein System, das zur automatischen Preisberechnung von elektronischen Fahrscheinen fähig ist.

Aus dem Stand der Technik ist es bereits bekannt, elektronische Fahrscheine auf mobilen Geräten, beispielweise Mobiltelefonen, zu speichern. Der gespeicherte elektronische Fahrschein kann dann von Kontrollpersonal überprüft werden. Bestenfalls sind die Mobiltelefone mit der Near Field Communication (NFC) Technologie ausgestattet, so dass die elektronischen Fahrscheine einfach und drahtlos darauf gespeichert werden können. Allerdings sind solche NFC-Mobiltelefone noch nicht flächendeckend verbreitet. Zudem können die derzeit vorhandenen Fahrscheinautomaten keine elektronischen Fahrscheine auf NFC-Mobiltelefone oder andere Datenträger laden.

Die vorliegende Erfindung stellt sich zur Aufgabe, eine attraktive Alternative zu elektronischen Fahrscheinen auf NFC-Mobiltelefonen bereitzustellen. Insbesondere soll jeder elektronische Fahrschein eindeutig einem Fahrgast zugeordnet sein. Das Kontrollpersonal soll in der Lage sein, den elektronischen Fahrschein in einer sehr kurzen Zeitspanne (ca. 3 Sekunden) einfach überprüfen und entwerten zu können. Benutzerdaten sollen allerdings nicht einfach und für jedermann auslesbar sein. Bestehende Fahrscheinautomaten sollen bestenfalls weiterverwendet werden können, wobei allerdings auf Papier gedruckte Fahrscheine, die hohe Kosten und Abfall verursachen, vermieden werden sollen.

Die oben genannten Aufgaben können mittels eines kartenförmigen Datenträgers und eines Systems, wie sie in den angehängten Ansprüchen beschrieben sind, gelöst werden.

Insbesondere betrifft die vorliegende Erfindung einen kartenförmigen Datenträger, der einen ersten Abschnitt aufweist, der mit einem einmalig beschreibbaren ersten Speicherelement (READ ONLY-Modul) versehen ist, und der einen zweiten Abschnitt aufweist, der mit einem wiederbeschreibbaren zweiten Speicherelement (READIWRITE-Modul) versehen ist.

Die vorliegende Erfindung betrifft weiter einen kartenförmiger Datenträger, der ein erstes Speicherelement aufweist, das eine erste flache Spule umfasst, und ein zweites Speicherelement aufweist, das eine zweite flache Spule umfasst, wobei die zweite Spule innerhalb der ersten Spule angeordnet ist.

Die Spulen können auf diese Weise platzeffizient angeordnet werden, wobei zudem die äußere erste Spule größer ist als die innere zweite Spule. Beide Speicherelemente können wiederbeschreibbar oder einmalig beschreibbar (aber beide lesbar) sein. Es kann auch beispielweise das erste Speicherelement ein einmalig beschreibbares Speicherelement (READ ONLY-Modul) sein und das zweite Speicherelement ein wiederbeschreibbares Speicherelement (READIWRTTE-Modul).

Vorteilhafterweise ist das erste Speicherelement und/oder das zweite Speicherelement ein NFC-Bauteil. Vorzugweise sind die NFC-Bauteile passive, nicht miteinander kommunizierende NFC-Chips, welche jeder eine Spule aufweist. Das Kontrollpersonal kann dann mittels beispielsweise eines NFC-Mobiltelefons einfach die Gültigkeit und die Art des Fahrscheins überprüfen und diesen entwerten. Es benötigt also nicht jeder ein NFC-Mobiltelefon, sondern nur das Kontrollpersonal.

Die Spulen dienen als Antennenspulen der NFC-Bauteile. Die erste Spule kann eine ovale Form aufweisen und die zweite Spule kann rund sein. Die erste Spule kann größenmaximiert werden, nämlich indem ihre wenigstens eine Windung den Kanten des kartenförmigen Datenträgers in festem Abstand folgt. Die erste Spule kann somit für eine magnetische Kopplung mit einer größtmöglichen Übertragungsreichweite ausgelegt werden. Die zweite Spule kann dafür kosteneffizient aber mit weniger Übertragungsreichweite ausgebildet werden. Die Reichweite des ersten Speicherelements beträgt vorzugsweise von 1 cm bis 10 cm, mehr bevorzugt von 5 cm bis 10 cm. Die Reichweite des zweiten Speicherelements beträgt vorzugsweise etwa von 1 cm bis 3 cm, mehr bevorzugt etwa 2 cm.

Vorteilhafterweise weisen die beiden Spulen einen Abstand von wenigstens 5 mm zueinander auf. Dies bezieht sich auf den Punkt, an dem sich die beiden Spulen am nächsten liegen. Übertragungsverluste aufgrund kapazitiver oder induktiver Kopplung zwischen den Spulen werden somit minimiert.

Vorteilhafterweise sind die Resonanzfrequenz der ersten Spule und die Resonanzfrequenz der zweiten Spule unterschiedlich ausgelegt. Dies verhindert, dass die Speicherelemente miteinander kommunizieren. Die zweite Spule des zweiten Speicherelements hat beispielweise eine Resonanzfrequenz von 13±0,5 MHz, während die erste Spule des ersten Speicherelements beispielweise eine Resonanzfrequenz von 16±0,5 MHz hat. Die Resonanzfrequenzen sollten beide innerhalb des Frequenzbandes liegen, das durch die ISO 14443 vorgegeben ist.

Vorteilhafterweise weist das erste Speicherelement eine niedrigere Kapazität als das zweite Speicherelement auf. Die Kapazität des ersten Speicherelements kann 1 KB bis 5 KB, vorzugsweise 2 KB betragen. Die Kapazität des zweiten Speicherelements kann 10-100 B, vorzugsweise 64 B betragen.

Das erste, vorzugsweise einmalig beschreibbare, Speicherelement kann dazu geeignet sein, Daten wie Benutzerdaten des Karteninhabers (z.B. Name, Kontaktdaten, Zahlungsmittel), Preisermäßigungen (z.B. eine Bahncard 50), Informationen bezüglich Zahlungsdetails und/oder eine Gültigkeitsdauer des Datenträgers oder von Preisermäßigungen zu speichern. Der kartenförmige Datenträger wird somit einmal einem Nutzer zugeordnet (das vorzugsweise einmalig beschreibbare Speicherelement wird beschrieben) und kann danach nicht mehr verändert werden. Das vorzugsweise einmalig beschreibbare Speicherelement kann auch eine komprimierte Bildinformation speichern, beispielweise ein Bild, das den Benutzer darstellt und zweifelsfrei identifiziert. Dies erleichtert die Fahrtenkontrolle. Das Kontrollpersonal kann beispielsweise mit einem aktiven Lesegerät die Daten aus dem vorzugsweise einmalig beschreibbaren Speicherelement auslesen, und den Fahrgast anhand des Benutzerbildes identifizieren. Es ist also nicht notwendigerweise noch ein Abgleich mit einem Personalausweis o.ä. nötig. Die Kapazität des vorzugsweise einmalig beschreibbaren Speicherelements sollte ausreichen, um neben den Benutzerdaten auch noch ein Bild einer Dateigröße von etwa 1 KB zu speichern.

Das zweite, vorzugsweise wiederbeschreibbare, Speicherelement kann dazu geeignet sein, elektronische Fahrgastdaten wie Fahrscheine und/oder Verbindungen zu speichern. Ein Fahrschein ist dann eindeutig dem Karteninhaber zugeordnet. Für diese Art von Informationen ist eine kleine Kapazität ausreichend und das zweite Speichelement kann kostengünstiger produziert werden.

Vorteilhafterweise ist das erste Speicherelement ein NFC-Bauteil, das zur Verschlüsselung gespeicherter Daten mittels eines Data Encryption Standard (DES) Algorithmus ausgelegt ist. Beispielweise kann der 3DES-Algorithmus ("triple-DES") zur Verschlüsselung verwendet werden. Der Vorteil ist in diesem Fall die hohe Sicherheit der gespeicherten Daten. Insbesondere für sensible Benutzerdaten ist dies im Sinne von Datenschutz wünschenswert. Die Daten in dem vorzugsweise einmalig beschreibbaren Speicherelement sind hinsichtlich ihrer Natur und Absicherung (Verschlüsselung) mit NFC-Bauteilen in Reisepässen vergleichbar.

Vorteilhafterweise ist das zweite Speicherelement ein NFC-Bauteil, das zur Speicherung unverschlüsselter Daten ausgelegt ist. Es ist auch eine Verschlüsselung möglich, aber zumindest werden die Daten mit deutlich weniger Aufwand (Komplexität) verschlüsselt als die Daten auf dem ersten, vorzugsweise einmalig beschreibbaren, Speicherelement. Die Ticketinformation kann zudem mit einem dynamischen Sicherungselement versehen werden, das Fälschungen verhindert. Der Vorteil in diesem Fall ist, dass solche NFC-Bauteile einfach und kostengünstig realisiert werden können.

Vorteilhafterweise ist der Datenträger aus einem Kunststoff- oder Plastikmaterial gefertigt und weist eine Dicke im Bereich von 0,4 mm - 1 mm, vorzugweise 0.4 mm ― 0.5 mm auf. Insbesondere könnte der Datenträger beispielweise etwa 0,8 mm dick sein, um sich einer Standarddicke bestehender Karten wie Kreditkarten anzupassen.

Bevorzugt ist die Dicke aber in etwa nur 0,48 mm, um sowohl einen stabilen aber auch leichten, dünnen und kostengünstigen Datenträger herzustellen. Die Speicherelemente sind vorzugsweise in den kartenförmigen Datenträger einlaminiert. Zusätzlich ist es auch möglich, den Datenträger mit einem vorzugsweise wiederbeschreibbaren Magnetstreifen zu versehen, der die gleichen Funktionalitäten wie das zweite, vorzugsweise wiederbeschreibbare, NFC-Modul aufweist. Damit wäre es möglich, die bestehenden Leser in den Ticketautomaten neben der Zahlungsfunktion auch für die Ticketausgabe ohne Papier zu verwenden, indem die Ticketinformation auf die Magnetspur geschrieben wird.

Die vorliegende Erfindung betrifft weiter ein System bestehend aus einem kastenförmigen Datenträger (wie oben beschrieben), wenigstens einem Automaten und einem Server, mit dem jeder Automat entweder online oder über eine Luftschnittstelle (OTA - Over The Air) z.B. per GPRS verbunden ist, wobei jeder Automat eine Lese/Schreibvorrichtung aufweist, die dazu ausgelegt ist, Daten aus dem ersten Speicherelement und dem zweiten Speicherelement auszulesen und Daten in das zweite Speicherelement zu schreiben.

Die Idee des erfindungsgemäßen Systems basiert darauf, dass ein Benutzer (Fahrgast) den kartenförmigen Datenträger in den Automaten einführt oder vor den Automaten hält und dabei sein Fahrtziel eingibt oder lediglich eine sog. START-Marke setzen lässt. Die Benutzerdaten können dabei aus dem ersten, vorzugsweise einmalig beschreibbaren, Speicherelement gelesen werden. Ein elektronischer Fahrschein kann dann in dem zweiten, vorzugsweise wiederbeschreibbaren, Speicherelement abgelegt werden. Der Benutzer kann diesen Vorgang (Einführen in einen Automaten oder Vorbeiziehen am aktiven NFC-Tag im Automaten) mehrfach ausführen, beispielweise bei jeder Fahrtunterbrechung, und insbesondere, wenn der Fahrgast umsteigt. Der Server kann alle Fahrten (Einzelverbindungen) und alle elektronischen Fahrscheine auswerten und dem Benutzer die Auswertung in Form einer elektronischen Nachricht, beispielsweise einer SMS oder E-Mail, bestätigen und übermitteln. Der Server kann auch automatisch einen Gesamtpreis für die elektronischen Fahrscheine ermitteln und diesen der elektronischen Nachricht anfügen.

Vorteilhafterweise ist jeder Automat dazu ausgelegt, eine START-Marke in das zweite Speicherelement zu schreiben, und der START-Marke eine Automaten-Identifikation zuzuordnen, falls noch keine START-Marke darin vorhanden ist. Vorteilhafterweise ist jeder Automat dazu ausgelegt, eine STOP-Marke in das zweite Speicherelement zu schreiben und der STOP-Marke eine Automaten-Identifikation zuzuordnen, falls eine START-Marke darin vorhanden ist.

Dadurch kann ein sogenannter START-STOP-Vorgang realisiert werden. Der Benutzer aktiviert dabei anfänglich einen elektronischen Fahrschein ohne Zieleingabe. Bei der Aktivierung setzt der erste Automat, der beispielweise einen aktiven NFC-Tag beinhaltet, die START-Marke. Bei jeder Unterbrechung der Fahrt (bei jedem Umsteigen) wird an einem anderen Automaten eine STOP-Marke gesetzt. Beim Umsteigen, resp. Weiterfahrt wird wieder eine neue START-Marke gesetzt und beim Fahrtende mit einer STOP-Marke abgeschlossen. Somit wird die gesamte Verbindung in dem Speicherelement abgelegt und kann am Ende der Fahrt ausgewertet werden. Die Verbindungen können optional oder zusätzlich auch auf dem Server gespeichert werden. Das Fahrtende wird durch die STOP-Marke gesetzt, wobei die Auslösung der Abrechnung sinnvollerweise auch durch das Setzen von 2 STOP-Marken kurz hintereinander am selben Automaten initialisiert werden.

Vorteilhafterweise ist der Server dazu ausgelegt basierend auf einer START-Marke, wenigstens einer STOP-Marke und den entsprechenden zugeordneten Automaten-Identifikationen einen Preis für einen elektronischen Fahrschein zu ermitteln. Nach Beendigung der letzten Fahrtstrecke, resp. Tagesende kann der Server z.B. nach einer BEST-PRICE Variante, die auf einer Kombination der verschiedenen durch die START- und STOP-Marken bestimmten Einzelverbindung basiert, einen Gesamtpreis berechnen und dem Konto des Benutzers zuordnen. Dabei können Ermäßigungen, Sonderangebote oder spezielle Angebote für Verbindungskombinationen berücksichtigt werden.

Vorteilhafterweise ist der Server dazu ausgelegt, eine elektronische Nachricht zu erzeugen und an einen Benutzer zu übermitteln, wobei die Kontaktdaten des Benutzers automatisch aus den Karteninhaberdaten in dem ersten Speicherelement bestimmt werden. Die Rechnung für den Gesamtpreis kann somit mit der elektronischen Nachricht, beispielsweise einer SMS, FAX oder E-Mail, zeitnah an den Benutzer versendet werden.

Ein allgemeiner Vorteil ist, dass der Benutzer bzw. der Fahrgast nicht ständig zahlen muss. Gewissermaßen wird ein bisheriges PREPAID-System auf ein DIRECT-BILLING-, resp. POSTPAID-System umgestellt. Seine Rechnung begleicht der Benutzer im Anschluss an die letzte Fahrt oder bei Erhalt der elektronischen Nachricht mit der Gesamtrechnung. Beispielsweise kann auch von dem Server am Monatsende eine Rechnung mit all den beanspruchten Dienstleistungen an den Benutzer übermittelt werden. Das Inkasso erfolgt gemäß den vom Fahrgast hinterlegten Zahlungsmitteln (Lastschriftverfahren, Belastung auf Konto, Kreditkarte oder Elektronisches Wallet, Monatsrechnung usw.). Der Zugriff auf den Server und auf das Konto des Fahrgastes ist web-basiert ausgelegt, sodass sämtliche Transaktionen transparent aktualisiert vorliegen.

Bestehende Fahrscheinautomaten können als die Automaten, die oben beschrieben werden, verwendet werden und können bei Verwendung von NFC-Bauteilen als die Speicherelemente des Datenträgers mit einem NFC-Leser oder -Schreiber ausgestattet werden. Es ist natürlich auch denkbar, eine andere Technologie als NFC zu verwenden, beispielsweise eine Technologie, die bereits in derzeit vorhandenen Fahrscheinautomaten zur Anwendung kommt (z.B. Chip oder Magnetstreifen).

Bereits jetzt verwenden viele Fahrgäste Ermäßigungskarten, wie z.B. eine Bahncard, weshalb die Einführung des kartenförmigen Datenträgers (wie oben beschrieben) einfach durchzuführen wäre. Es müssten sinnvollerweise keine Fahrscheine mehr auf Papier ausgestellt werden, womit hohe Kosten und Abfall vermieden werden. Auch die Handlings- und Opportunitätskosten für das Bargeldhandling werden signifikant reduziert. Die elektronischen Fahrscheine würden auch immer eindeutig einem Fahrgast zugeordnet sein, und Ermäßigungen könnten mit berücksichtigt werden.

Die vorliegende Erfindung wird im Folgenden anhand der beigefügten Figuren genauer beschrieben.
Figur 1 zeigt einen kartenförmigen Datenträger gemäß der vorliegenden Erfindung.
Figur 2 zeigt einen kartenförmigen Datenträger gemäß der vorliegenden Erfindung.
Figur 3 zeigt ein System gemäß der vorliegenden Erfindung.
Figur 4 veranschaulicht zwei Varianten für START- und STOP-Marken wie sie auf dem kartenförmigen Datenträger der vorliegenden Erfindung abgespeichert werden.

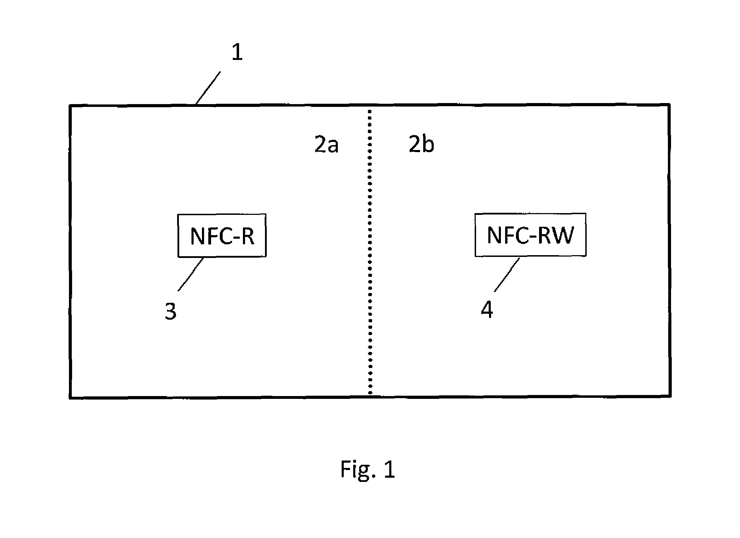

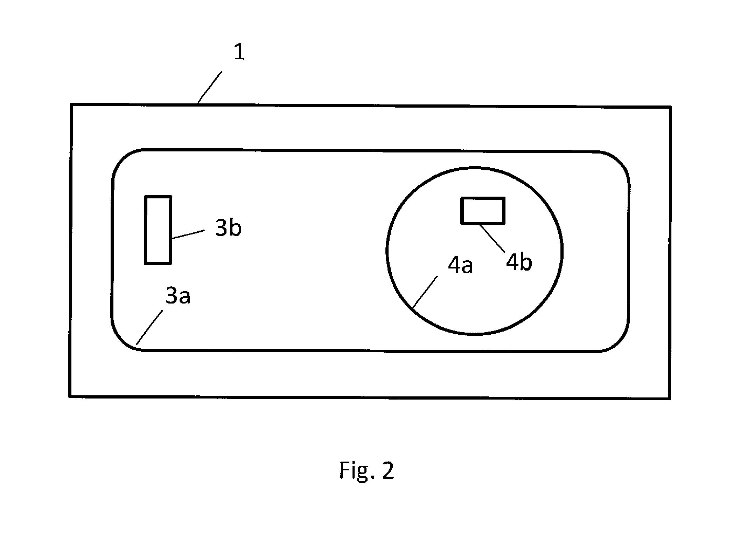

Figur 1 zeigt einen kartenförmigen Datenträger 1, der einen ersten Abschnitt 2a und einen zweiten Abschnitt 2b aufweist. Der erste Abschnitt 2a ist beispielweise wie in Figur 1 die linke Hälfte des kartenförmigen Datenträgers 1, während der zweite Abschnitt in Figur 1 die rechte Hälfte des kartenförmigen Datenträgers 1 ist. Die Abschnitte 2a und 2b können allerdings auch anders auf dem kartenförmigen Datenträger 1 angeordnet werden. Die Abschnitte können beispielweise ineinander angeordnet sein, wie unten in Bezug auf Fig. 2 beschrieben, oder können sich gegenseitig überlappen. Es können auch die zwei verschiedenen Oberflächen (d.h. die Vorder- und Rückseite) des kartenförmigen Datenträgers 1 die Abschnitte 2a und 2b festlegen. Allerdings ist dann eine gewisse Dicke (etwa 1 mm) des kartenförmigen Datenträgers 1 wünschenswert.

Der erste Abschnitt 2a ist mit einem ersten Speicherelement 3 versehen. Der zweite Abschnitt 2b ist mit einem zweiten Speicherelement 4 versehen. Die Speicherelemente 3, 4 können beide einmalig beschreibbar sein, oder beide wiederbeschreibbar sein. Es kann auch eines wiederbeschreibbar sein, das andere nur einmalig beschreibbar. In einer vorteilhaften Ausführungsform ist das erste Speicherelement 3 einmalig beschreibbar und das zweite Speicherelement wiederbeschreibbar. Das vorzugsweise einmalig beschreibbare erste Speicherelement 3 ist in Figur 1 mit NFC-R gekennzeichnet. Die Kennzeichnung zeigt ein NFC-READ/ONLY-Bauteil an. So ein NFC-Bauteil kann mittels NFC-Technologie nur ausgelesen werden, nachdem es einmal beschrieben wurde. Das vorzugsweise einmalig beschreibbare erste Speicherelement 3 sollte möglichst zur Verschlüsselung gespeicherter Daten mittels beispielweise eines DES-Algorithmus, etwa eines DES-3 Algorithmus (manchmal auch als "triple-DES" bezeichnet), ausgelegt sein. Es kann dafür zum Beispiel ein "Mifare Desfire 2K" (eingetragene Marke) Bauteil verwendet werden. Ein solches NFC-Bauteil beinhaltet einen Mikrocontroller, der basierend auf einem 3-DES Algorithmus eine hochsichere Verschlüsselung ausführen kann.

Das vorzugsweise wiederbeschreibbare zweite Bauteil 4 ist in der Figur 1 als NFC-RW, d.h. NFC-READ/WRITE gekennzeichnet. Das vorzugsweise wiederbeschreibbare Speicherelement 4 kann zum Beispiel ein "Mifare Ultralight" (eingetragene Marke) Bauteil sein. Ein solches Bauteil stellt eine low-cost-Variante mit oder ohne Verschlüsselung dar. Zudem kann ein dynamischer Sicherheitscode das Fälschungsrisiko signifikant verringern. Ein solches Bauteil kann daher kostengünstig verbaut werden. Damit gewährleistet der kartenförmige Datenträger 1 zum einen eine hohe Sicherheit der persönlichen Daten des Benutzers, zum anderen eine kostengünstige Herstellung.

Der kartenförmige Datenträger 1 ist vorzugsweise aus Plastik oder einem anderen Kunststoff wie beispielwese PVC (Polyvinylchlorid) gefertigt, so dass er leicht und robust ist. Idealerweise hat der kartenförmige Datenträger 1 die Abmessungen (Höhe und Breite) einer gewöhnlichen Kreditkarte oder Bahncard. Vorzugsweise sind die Abmessungen des kartenförmigen Datenträgers 85-87 mm x 53-55 mm, noch mehr bevorzugt 86 mm x 54 mm. Allerdings ist die Erfindung nicht darauf beschränkt. Die Dicke des Datenträgers 1 liegt vorzugsweise in einem Bereich von 0,4 mm bis 1 mm, vorzugsweise 0,4 mm bis 0,5 mm. Eine Dicke von 0,48 mm wäre eine besonders bevorzugte Dicke, um einen möglichst dünnen aber stabilen Datenträger 1 herzustellen. Allerdings könnte auch ein 0,8 mm dicker Datenträger 1 hergestellt werden, wobei die Dicke der Standarddicke herkömmlicher Karten gleicht. Die NFC-Bauteile sind in den kartenförmigen Datenträger 1 einlaminiert.

Figur 2 zeigt eine Ausführungsform des kartenförmigen Datenträgers 1. Das erste Speicherelement 3 weist eine erste flache Spule 3a auf, und das zweite Speicherelement 4 weist eine zweite flache Spule 4 auf. Flach bedeutet, dass die wenigstens eine Windung von beiden Spulen 3a, 4a in der Ebene des kartenförmigen Datenträgers 1 liegt und dünner als der Datenträger 1 selbst ist. Wiederum können die Speicherelemente 3, 4 wiederbeschreibbar oder einmalig beschreibbar sein.

Vorzugsweise ist die wenigstens eine Windung der zweiten Spule 4a innerhalb der wenigstens einen Windung der ersten Spule 3a angeordnet, wie es die Fig. 2 veranschaulicht. Die erste Spule 3a umschließt also die zweite Spule 4a. Die erste Spule 3a kann beispielweise wenigstens eine ovale Windung aufweisen, die in nahezu festem Abstand den Kanten des kartenförmigen Datenträgers 1 folgt (d.h. außer an den gerundeten Ecken der Spulenwindung. Eine Spule mit rechtwinkligen Ecken wäre unvorteilhaft). Die zweite Spule 4a kann beispielweise wenigstens eine runde Windung aufweisen. Allerdings könnte auch die zweite Spule 4a oval geformt sein. Beide Spulen 3a, 4a können mehrere Windungen aufweisen, die entweder spiralförmig ineinander laufen, oder übereinander (in Richtung der Dicke des Datenträgers 1) liegen. Die Anzahl der Windungen der ersten Spule 3a kann dabei gleich oder unterschiedlich der Anzahl der Windungen der zweiten Spule 4a sein.

Die zweite Spule 4a ist kleiner und weist deshalb eine geringere Reichweite (Übertragungsreichweite) auf. Als Reichweite ist dabei der maximale Abstand zu einer anderen externen Spule (beispielweise der Spule eines NFC-Bauteils eines aktiven Lesegeräts) zu verstehen, bei dem eine Datenübertragung durch die magnetische (induktive) Kopplung noch fehlerfrei funktioniert.

Das erste Speicherelement 3 kann weiterhin einen integrierten Schaltkreis (IC-Chip) 3b aufweisen, der mit der ersten Spule 3a verbunden ist. Genauso kann das zweite Speicherelement 4 einen mit der zweiten Spule 4a verbundenen IC-Chip 4b aufweisen. Zusammen aus Spule 3a bzw. 4a und den IC-Chips 3b bzw. 4b wird jeweils ein NFC-Bauteil 3 bzw. 4 gebildet.

Die zweite Spule 4a ist in Fig. 2 nicht mittig innerhalb der ersten Spule 3a angeordnet, sondern in Draufsicht auf Fig. 2 leicht nach rechts versetzt. Insbesondere werden dadurch die IC-Chips 3a und 4b in einem Abstand voneinander angeordnet. Die rechte Seite des kartenförmigen Datenträgers 1 ist in diesem Fall dazu ausgelegt (und möglicherweise auf der Oberfläche des Datenträgers 1 gekennzeichnet), durch einen Kartenleser eines Fahrkartenautomaten gezogen zu werden. Der IC-Chip 4b kann dann über die Antennenspule 4a ausgelesen werden. Der IC-Chip 3b bleibt unbeeinflusst. Die gezeigte Anordnung der zwei Spulen 3a und 4a ist allerdings nicht beschränkend.

Das zweite Speicherelement 4 kann zum Auslesen 1 der darauf gespeicherten Daten beispielweise durch einen Kartenleser eines Lesegeräts (oder eines Fahrkartenautomaten) gezogen werden. Dafür ist eine geringere Reichweite von etwa 2 cm ausreichend. Das zweite Speicherelement 4 ist so ausgelegt, dass bis zu einem Abstand von 10 cm Daten ausgelesen werden können. Dies ist beispielweise vorteilhaft, wenn die darin gespeicherten Daten von Kontrollpersonal mit einem mobilen aktiven Lesegerät ausgelesen werden.

Das erste, vorzugsweise das einmalig beschreibbare, Speicherelement 3 weist vorzugsweise eine niedrigere Kapazität als das zweite, vorzugsweise das wiederbeschreibbare, Speicherelement 4 auf. Die Kapazität des ersten Speicherelements 3 kann 1 KB bis 5 KB, vorzugsweise 2 KB betragen. Die Kapazität des zweiten Speicherelements 4 kann 10 bis 100 B, vorzugsweise 64 B betragen.

Die Spulen 3a, 4a sind vorzugsweise aus Kupfer gefertigt und sind in den kartenförmigen Datenträger 1 einlaminiert. Andere leitfähige Materialien sind ebenfalls denkbar. Die Resonanzfrequenz der ersten Spule 3a und die Resonanzfrequenz der zweiten Spule 4a sind vorzugsweise unterschiedlich. Dies verhindert, dass die Speicherelemente 3, 4 miteinander kommunizieren. Die zweite Spule 4a des zweiten Speicherelements 4 hat beispielweise eine Resonanzfrequenz von 13±0,5 MHz, während die erste Spule 3a des ersten Speicherelements 3 beispielweise eine Resonanzfrequenz von 16±0,5 MHz hat. Die Resonanzfrequenzen sollten beide innerhalb des Frequenzbandes liegen, das durch die ISO 14443 vorgegeben ist.

Die Speicherelemente 3, 4 weisen vorzugsweise eine zulässige Betriebstemperatur zwischen -25°C und +50°C auf. Auch die maximale Speicherungstemperatur liegt in diesem Bereich.

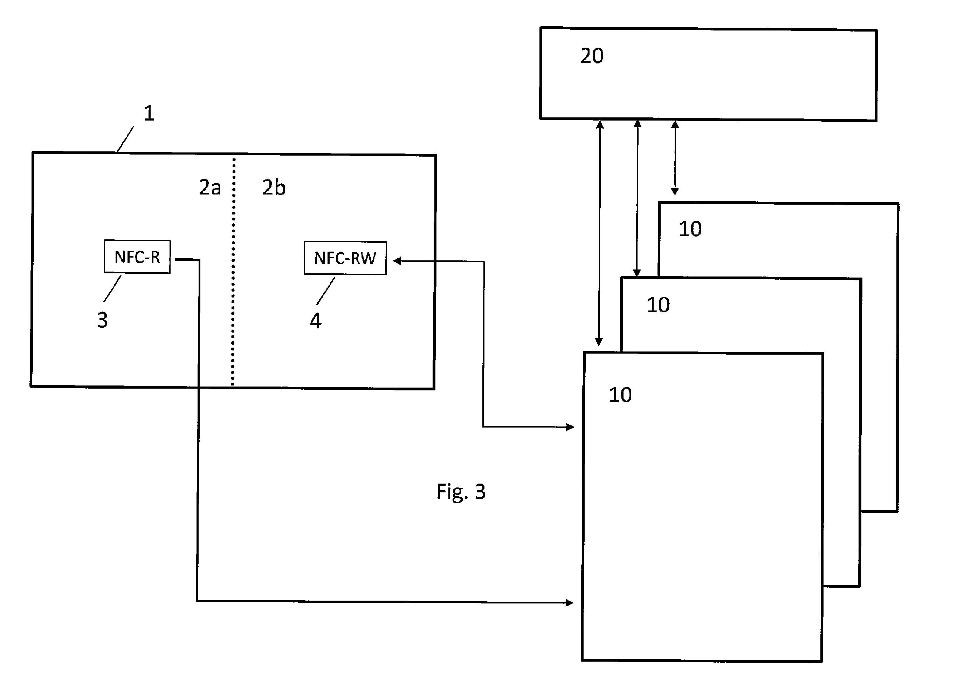

Figur 3 zeigt ein System der vorliegenden Erfindung. Das System besteht aus einem kartenförmigen Datenträger 1, so wie er oben beschrieben ist. Des Weiteren besteht das System aus wenigstens einem Automaten 10. In der Figur 3 sind drei Automaten 10 dargestellt. Die Anzahl der Automaten 10 ist nicht beschränkt. Die Automaten 10 können herkömmliche Fahrscheinautomaten sein, die vorteilhafterweise mit einem NFC-Schreib/Lesegerät ausgestattet werden können. Die Automaten 10 können aus dem ersten, vorzugsweise einmalig beschreibbaren, Speicherelement 3 des kartenförmigen Datenträgers 1 die Benutzerdaten, Ermäßigungen, Kontodaten oder eine Gültigkeitsdauer des Datenträgers 1 etc. auslesen. Diesen Lesevorgang können die Automaten 10 z.B. dann durchführen, wenn ein Benutzer den kartenförmigen Datenträger 1 in den Automaten 10 einführt oder an eine geeignete Stelle an das NFC-Lese-/Schreibgerät hält. Idealerweise sind die Abschnitte 2a und 2b des kartenförmigen Datenträgers 1 so angeordnet, dass der Benutzer intuitiv entweder den ersten Abschnitt 2a an den Automaten 10 hält (in den Automaten 10 einführt), falls er eine Erkennung oder Aktivierung durchführen will, oder den anderen Abschnitt 2b an den Automaten 10 hält, falls er einen elektronischen Fahrschein lösen, d.h. auf den Datenträger 1 speichern, will. Am besten ist jeder Automat 10 allerdings dazu geeignet, beide Speicherelemente 3, 4 gleichzeitig auszulesen und unterscheiden zu können. Jeder Automat 10 sollte mit der Verschlüsselungstechnologie für das erste Speicherelement 3 kompatibel sein.

Jeder Automat 10 ist ferner in der Lage, Daten von dem zweiten, vorzugsweise wiederbeschreibbaren, Speicherelement 4 zu lesen und Daten in dieses hineinzuschreiben. Das System der vorliegenden Erfindung umfasst weiter einen Server 20, der mit jedem der Automaten 10 verbunden ist und mit diesem kommunizieren kann. Automaten 10 und Server 20 sind dafür am Besten in ein Netzwerk, vorzugsweise das Internet integriert.

Verschiedene Automaten 10 können dann z.B. an verschiedenen Orten (etwa verschiedenen Bahnhöfen) aufgestellt sein. Jeder Automat 10 ist dazu geeignet, eine anfängliche Aktivierung des kastenförmigen Datenträgers 1, bzw. ein erstes Speichern eines elektronischen Fahrscheins durchzuführen, indem er eine START-Marke in dem zweiten Speicherelement 4 setzt. Die START-Marke kann ein geeigneter Eintrag im Speicherelement sowie eine Flagge sein. Der START-Marke wird zudem eine Automaten-Identifikation zugeordnet. Beispielsweise kann ein Ortsname, an dem der Automat 10 aufgestellt ist, oder eine Automatennummer als die Automaten-Identifikation dienen.

Genau wie für die START-Marke ist jeder Automat 10 dazu geeignet, eine STOP-Marke zu setzen. Jeder Automat 10 kann dafür zunächst das zweite Speicherelement 4 auslesen und bestimmen, ob oder nicht bereits eine START-Marke gesetzt wurde. Wurde bereits eine START-Marke gesetzt, so wird als nächstes eine STOP-Marke gesetzt, der wiederum wie oben eine Automaten-Identifikation zugeordnet wird. Wurde noch keine START-Marke gesetzt, so wird zunächst eine START-Marke von dem Automaten 10 gesetzt.

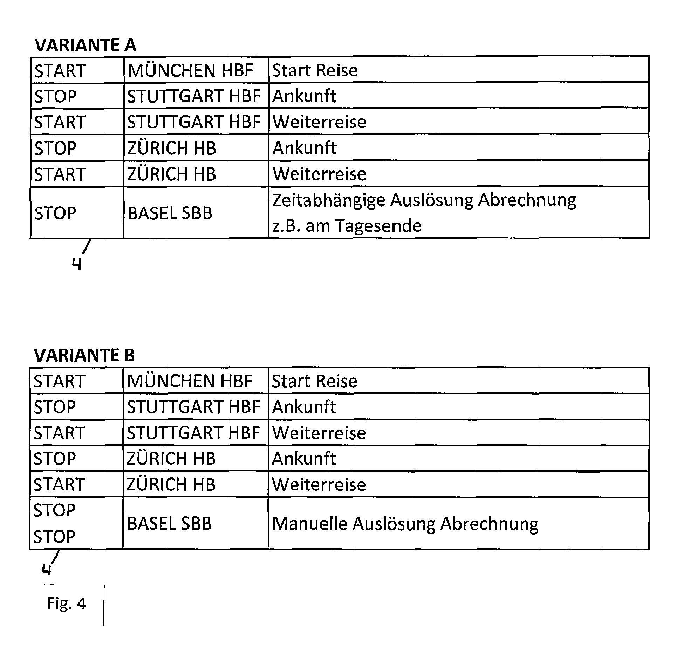

Durch das Setzen der START- bzw. STOP-Marken kann ein sogenannter START-STOP-Vorgang realisiert werden. Dies ist z.B. in der Figur 4 veranschaulicht. Eine START-Marke wurde anfänglich in dem zweiten Speicher 4 geschrieben, und mit einer Automaten-Identifikation (in diesem Fall dem Ortsnamen, in dem der Automat 10 steht, d.h. z.B. München Hauptbahnhof) zugeordnet. Drei weitere STOP-Marken wurden gesetzt, und die zugehörigen Ortsnamen entsprechend der jeweiligen Automaten 10, welche die STOP-Marke gesetzt haben, wurden in dem zweiten Speicherelement 4 zugeordnet.

Der Fahrgast kann am Ende seiner Reise auch durch das Setzen von zwei STOP-Marken kurz hintereinander und am selben Automaten den Abrechnungsprozess für seinen Fahrschein manuell auslösen. Am Ende einer Reise, oder auch am Ende einer vorgegebenen Zeitspanne wie beispielsweise einem Tag, einer Woche oder einem Monat, wird basierend auf den START-Marken, den STOP-Marken und den Automaten-Identifikationen ein Gesamtpreis für einen elektronischen Fahrschein ermittelt. Dies wird vorzugsweise gemäß der bekannten BEST-PRICE-Variante durchgeführt. Ein Server 20 kann dazu die durch die Automaten 10 aus dem kartenförmigen Datenträger 1 ausgelesenen Daten speichern und den Preisermittlungsvorgang durchführen. Der Server 20 kann zudem eine automatische elektronische Nachricht, wie beispielsweise eine SMS, eine E-Mail oder ein Fax generieren und an den Benutzer versenden. Dabei kann sich der Server 20 eigenständig aus den ausgelesenen Benutzerdaten eine Kontaktadresse des Benutzers besorgen.

Der Server 20 kann alternativ auch dazu geeignet sein, am Ende beispielweise jeden Tages eine Gesamtrechnung zu erstellen und auf dem Server 20 abzuspeichern. Mehrere Gesamtrechnungen können dann beispielweise am Monatsende in einer elektronischen Nachricht zusammengefasst werden und dem Benutzer übermittelt werden. Es ist allerdings auch denkbar, dass der Server 20 automatisch ein Benutzerkonto belastet, resp. auf das hinterlegte Zahlungsmittel des Benutzers zugreift (Bankkonto, Kreditkarte, Lastschriftverfahren usw.). Die automatische Zahlung wird dabei über eine verschlüsselte und vorher authentisierte Datenkommunikation getätigt.

Zusammenfassend beschreibt die vorliegende Erfindung einen kartenförmigen Datenträger 1, auf dem sowohl Benutzerdaten, Ermäßigungen und Gültigkeitsdauer fälschungssicher abgespeichert werden können, als auch elektronische Fahrscheine einfach und überschreibbar gespeichert werden können. Der kartenförmige Datenträger 1 stellt eine attraktive Ergänzung, resp. Alternative zu elektronischen Fahrscheinen auf NFC-Mobiltelefonen dar. Es bedarf dem Kontrollpersonal entweder nur ein einziges NFC-Mobiltelefon oder ein NFC-fähiges Kontrollgerät, um die elektronischen Fahrscheine der einzelnen Fahrgäste zu überprüfen (vorausgesetzt jeder Fahrgast besitzt einen Datenträger 1 gemäß der vorliegenden Erfmdung). Der kartenförmige Datenträger 1 weist für die Speicherung zwei verschiedene Speicherelemente 3, 4, idealerweise NFC-Bauteile auf. Eines ist bevorzugt ein Hochsicherheits-Bauteil ist, in dem benutzerrelevante Daten abgespeichert werden, und das andere ist ein kostengünstiges Bauteil, in dem ein elektronischen Fahrschein bzw. Daten bezüglich eines START-STOP-Vorgangs abgespeichert werden.

## Patentansprüche

1. Kartenförmiger Datenträger (1), der aufweist
einen ersten Abschnitt (2a), der mit einem einmalig beschreibbaren ersten Speicherelement (3) versehen ist und
einen zweiten Abschnitt (2b), der mit einem wiederbeschreibbaren zweiten Speicherelement (4) versehen ist.

2. Kartenförmiger Datenträger (1) der aufweist,
ein erstes Speicherelement (3), das eine erste flache Spule (3a) umfasst ein zweites Speicherelement (4), das eine zweite flache Spule (4a) umfasst, wobei die zweite Spule (4a) innerhalb der ersten Spule (3a) angeordnet ist.

3. Kartenformiger Datenträger (1) gemäß Anspruch 2,
wobei die beiden Spulen einen Abstand von wenigstens 5 mm zueinander aufweisen.

4. Kartenförmiger Datenträger (1) gemäß Anspruch 2 oder 3,
wobei die Resonanzfrequenz der ersten Spule (3a) und die Resonanzfrequenz der zweiten Spule (4a) unterschiedlich sind.

5. Kartenförmiger Datenträger (1) gemäß einem der Ansprüche 1 bis 4
wobei das erste Speicherelement (3) eine niedrigere Kapazität als das zweite Speicherelement (4) aufweist.

6. Kartenförmiger Datenträger (1) gemäß einem der Ansprüche 1 bis 5, wobei das erste Speicherelement (3) und/oder das zweite Speicherelement (4) ein Near Field Communication Bauteil, NFC-Bauteil, ist.

7. Kartenförmiger Datenträger (1) gemäß Anspruch 6, wobei das erste Speicherelement (3) ein NFC-Bauteil ist, das zur Verschlüsselung gespeicherter Daten mittels eines Data Encryption Standard, DES, Algorithmus ausgelegt ist.

8. Kartenförmiger Datenträger (1) gemäß Anspruch 6 oder 7, wobei das zweite Speicherelement (4) ein NFC-Bauteil, das zur Speicherung unverschlüsselter Daten ausgelegt ist.

9. Kartenförmiger Datenträger (1) gemäß einem der Ansprüche 1 bis 8, der zusätzlich mit einem vorzugsweise wiederbeschreibbaren Magnetstreifen versehen ist, wobei der Magnetstreifen vorzugsweise gleiche Funktionalitäten wie das zweite Speicherelement (4) aufweist.

10. Kartenförmiger Datenträger (1) gemäß einem der Ansprüche 1 bis 9, der aus einem Kunststoff- oder Plastikmaterial gefertigt ist und eine Dicke in einem Bereich von 0.4 mm — 1 mm, vorzugweise 0.4 mm — 0.5 mm aufweist, wobei die Speicherelemente (3, 4) in den kartenförmigen Datenträger (1) einlaminiert sind.

11. Kartenförmiger Datenträger (1) gemäß einem der Ansprüche 1 bis 10,
wobei das erste Speicherelement (3) zum Speichern von Benutzerdaten des Karteninhabers, Ermäßigungen und einer Gültigkeitsdauer des kartenförmigen Datenträgers (1) ausgelegt ist, und
wobei das zweite Speicherelement (4) zum Speichern von elektronischen Fahrscheinen ausgelegt ist.

12. Kartenförmiger Datenträger (1) gemäß einem der Ansprüche 1 bis 11,
wobei das zweite Speicherelement (4) zum Speichern eines komprimierten Bildes ausgelegt ist.

13. System bestehend aus einem kartenförmigen Datenträger (1) gemäß einem der Ansprüche 1 bis 12, wenigstens einem Automaten (10) und einem Server (20), mit dem jeder Automat (10) verbunden ist,
wobei jeder Automat (10) eine Lese/Schreib-Vorrichtung aufweist, die dazu ausgelegt ist,
Daten aus dem ersten Speicherelement (3) und dem zweiten (4) auszulesen und Daten in das zweite Speicherelement (4) zu schreiben.

14. System gemäß Anspruch 13, wobei jeder Automat (10) dazu ausgelegt ist,
eine START-Marke in das zweite Speicherelement (3) zu schreiben und der START-Marke eine Automaten-Identifikation zuzuordnen, falls noch keine START-Marke darin vorhanden ist und
eine STOP-Marke in das zweite Speicherelement zu schreiben und der STOP-Marke eine Automaten-Identifikation zuzuordnen, falls eine START-Marke darin vorhanden ist.

15. System gemäß Anspruch 13, wobei der Server (20) dazu ausgelegt ist, basierend auf einer START-Marke, wenigstens einer STOP-Marke und den zugeordneten Automaten-Identifikationen einen Preis für einen elektronischen Fahrschein zu ermitteln.

16. System gemäß einem der Ansprüche 13 oder 14 wobei der Server (20) dazu ausgelegt ist,
eine elektronische Nachricht zu erzeugen und an einen Benutzer zu übermitteln, wobei die Kontaktdaten des Benutzers automatisch aus den Karteninhaberdaten in dem ersten Speicherelement (3) bestimmt werden.
